# EUROPÄISCHE PATENTSCHRIFT

(11) **EP 1 125 407 B1**
(45) Veröffentlichungstag und Bekanntmachung des Hinweises auf die Patenterteilung: **04.02.2004**
(21) Anmeldenummer: 99955954.5
(22) Anmeldetag: 03.11.1999
(51) Int. Cl.: H04L 27/06, H04L 25/06, G06K 7/00

(54) **VERFAHREN ZUR ASK-DEMODULATION UND ASK-DEMODULATOR**
METHOD FOR ASK DEMODULATION AND ASK DEMODULATOR
PROCEDE ET DEMODULATEUR POUR LA DEMODULATION D'UNE TENSION MODULEE PAR DEPLACEMENT D'AMPLITUDE

(30) Priorität: 05.11.1998 EP 98120985
(43) Veröffentlichungstag der Anmeldung: 22.08.2001
(73) Patentinhaber: Infineon Technologies AG, 81669 München (DE)
(72) Erfinder: NEBEL, Gerhard, D-87509 Immenstadt (DE); GÜNGERICH, Volker, D-80997 München (DE); BLUM, Andreas, D-80639 München (DE); WEDER, Uwe, D-84072 Au (DE); EICHNER, Dierk, D-80689 München (DE); REINER, Robert, D-85579 Neubiberg (DE); SCHRAUD, Gerhard, D-86415 Mehring (DE)
(74) Vertreter: Epping Hermann & Fischer
(86) Internationale Anmeldenummer: PCT/EP1999/008430
(87) Internationale Veröffentlichungsnummer: WO 2000/028708

(56) Entgegenhaltungen:
- EP-A- 0 525 642
- DE-A- 4 001 411
- DE-A- 19 703 967
- BOUVIER J ET AL: "SA 17.6: A SMART CARD CMOS CIRCUIT WITH MAGNETIC POWER AND COMMUNICATIONS INTERFACE" IEEE INTERNATIONAL SOLID STATE CIRCUITS CONFERENCE, Bd. 40, Februar 1997 (1997-02), Seite 296/297, 474 XP000753106 New York, US in der Anmeldung erwähnt

## Beschreibung

Die Erfindung betrifft ein Verfahren zur Demodulation einer durch Wechsel der Amplitude zwischen einem niedrigen und einem hohen Pegel (ASK-) modulierten Spannung, das insbesondere zur Anwendung bei einer kontaktlosen Datenübertragung von einem Karten-Schreib-/Lesegerät zu einer Chipkarte geeignet ist, einen Demodulator zur Durchführung des Verfahrens, sowie eine Schaltungsanordnung für eine Chipkarte mit einem solchen Demodulator.

Chipkarten, die anstelle eines Magnetstreifens einen elektronischen Chip aufweisen, haben aufgrund ihrer wesentlich höheren Leistungsfähigkeit und den damit verbundenen vielfältigeren Einsatzmöglichkeiten eine zunehmende Bedeutung. Da die Chipkarten nach dem Einführen in ein Kartenlesegerät kontaktlos betrieben werden sollen, ist es erforderlich, die auf der Chipkarte empfangene Spannung nicht nur zu demodulieren, sondern daraus auch die für den Chip erforderliche Versorgungsspannung zu erzeugen.

Zur Datenübertragung von dem Kartenlesegerät zur Chipkarte sind verschiedene Modulationsverfahren bekannt. Neben dem OOK-Verfahren (On-Off-Keying) findet besonders häufig eine Modulation durch Amplitudenwechsel zwischen zwei Pegeln (ASK - Amplitude Shift Keying) statt, und zwar im allgemeinen im Bereich von acht bis zwölf Prozent der Gesamtamplitude und mit einer NRZ-Codierung (Non Return to Zero).

An den auf der Chipkarte befindlichen Demodulator werden dabei besondere Anforderungen gestellt, da sich Bewegungen der Karte im Sendefeld des Kartenlesegerätes wie eine Modulation auswirken, jedoch von dieser unterschieden werden müssen. Dies hat zur Folge, daß die Demodulatorschaltung z.B. 10 %ige Pegelschwankungen mit unterschiedlicher Dauer (NRZ-Codierung) bei Betriebsspannungsschwankungen unterschiedlicher Dauer de-modulieren können muß, die um ein Vielfaches größer sind, als die eigentliche Amplitudenmodulation. Folglich ist auch der Dynamikbereich des zu demodulierenden Signals relativ groß. Diesem Signal ist außerdem die doppelte Frequenz des Trägers überlagert, da das empfangene Signal zunächst über einen Zweiweggleichrichter geführt wird.

Aus der DE 197 03 967 A1 ist ein Empfänger mit Amplitudenumtastung bekannt. Es wird ein ASK-Empfänger offenbart, der folgendes aüfweist:

Einen Signalempfangsteil zum Empfangen, Verstärken und Quandisieren eines ASK-Signals, ein Frequenzteiler zum Teilen eines Taktsignals mit einem vorgestammten Wert, einem Zählteil zum Zählen des ASK-Signals mit vorbestimmten Intervallen unter Steuerung durch den Frequenzteiler, einen Vergleichsteil zum Vergleich des Zählwertes zum Zählteil mit einem Bezugswert zum Ermitteln, ob der Zählwert in einem vorbestimmten Bereich fällt, um zu bestimmen, ob das Signal normal ist. Es ist weiterhin ein Impulserfassungsteil zum Kompensieren von Fehlern vorgesehen, wie sie im Vergleichsteil durch Störsignale erzeugt werden, die teilweise im Signal vom Signalempfangsteil enthalten sind. Weiterhin ist ein Zähler mit Zufallsteil zum Erzeugen eines Signals vorgesehen, das den Ausgangssignalen sowohl vom Vergleichsteil als auch vom Impulserfassungsteil gleichzeitig genügt, durch Verwendung eines Taktsignals, dessen Geschwindigkeit das n-fache der Übertragungsrate ist. Schließlich ist ein Signalwiederherstellungsteil zum Wiederherstellen des ursprünglichen Signals aus dem Signal von Zähler mit Zufallsteil vorgesehen.

Aus den ISSCC 97, Abschnitt 17.6 ist eine Schaltung bekannt, bei der das in der Versorgungsspannung enthaltene ASK-modulierte Signal unter Verwendung eines Komparators mit seinem verzögerten Signal verglichen und daraus das digitale Signal gewonnen wird. Nachteilig hierbei ist jedoch der nur geringe Pegelbereich, innerhalb dem der Komparator arbeitet. Eine Regelung der Versorgungsspannung ist dabei nicht möglich, da hierdurch das zu demodulierende Signal verloren gehen würde. Eine Pegeldifferenzmessung ist außerdem sehr störanfällig.

Der Erfindung liegt deshalb Aufgabe zugrunde, ein Verfahren der eingangs genannten Art sowie einen Demodulator zur Durchführung des Verfahrens zu schaffen, mit dem eine wesentlich zuverlässigere Wiedergewinnung des übertragenen Datensignals möglich ist.

Gelöst wird,diese Aufgabe gemäß Anspruch 1 mit einem eingangs genannten Verfahren, bei dem in einer Initialisierungsphase ein erster Mittelwert aus dem hohen Spannungspegel und einer daraus abgeleiteten und gespeicherten Teilspannung erzeugt wird, um durch anschließenden Vergleich der modulierten Spannung mit diesem ersten Mittelwert einen Wechsel auf einen einen Startwert darstellenden niedrigen Spannungspegel zu erfassen; und in einer anschließenden Demodulationsphase ein zweiter Mittelwert aus dem erfaßten niedrigen und dem hohen Spannungspegel erzeugt wird, um die modulierte Spannung durch Vergleich mit dem zweiten Mittelwert zu demodulieren.

Die Aufgabe wird ferner mit einem Demodulator gemäß Anspruch 2 gelöst, bei dem zur Erzeugung des ersten Mittelwertes ein aus einer Reihenschaltung eines ersten und eines zweiten Kondensators gebildeter kapazitiver Spannungsteiler vorgesehen ist, an den die modulierte Spannung anlegbar ist, und daß ein Vergleicher vorgesehen ist, dessen erstem Eingang'über einen Abgriff des Spannungsteilers der erste Mittelwert zugeführt wird und an dessen zweitem Eingang die modulierte Spannung anliegt, und dass ein dritter Kondensator zum Speichern des erfaßten niedrigen Spannungspegels vorgesehen ist, der zur Erzeugung des zweiten Mittelwertes parallel mit der Reihenschaltung aus dem ersten und dem zweiten Kondensator schaltbar ist.

Ein besonderer Vorteil dieser Lösung besteht darin; daß eine hohe Störsicherheit gegen Spikes gegeben ist. Dies wird in erster Linie dadurch erreicht, daß ein Startpegel nicht mit-tels einer Flankenerkennung, sondern mittels einer Pegelmessung und aus einer 2 aus 3 Pegelbewertung gewonnen wird.

Die Unteransprüche haben vorteilhafte Weiterbildungen der Erfindung zum Inhalt.

Weitere Einzelheiten, Merkmale und Vorteile ergeben sich aus der folgenden Beschreibung einer bevorzugten Ausführungsform anhand der Zeichnung. Es zeigt:
- Fig. 1: ein Blockschaltbild einer Schaltungsanordnung für eine Chipkarte und
- Fig. 2: ein Prinzipschaltbild eines erfindungsgemäßen Demodulators.

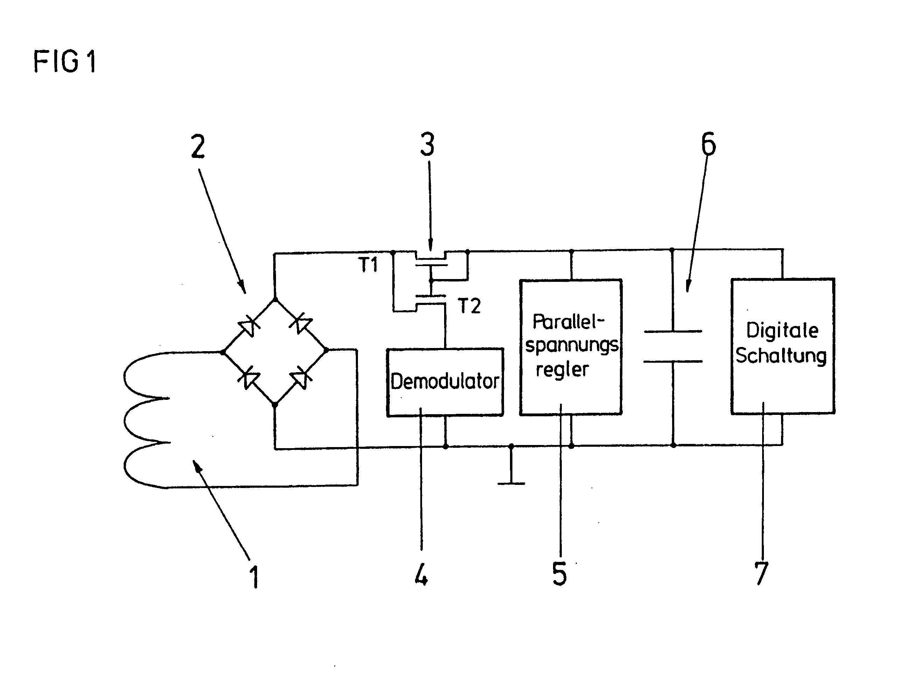

Die Schaltungsanordnung gemäß Figur 1 umfaßt eine Induktivität 1, in der durch das elektromagnetische Feld, das von dem Karten-Schreib/Lesegerät ausgesendet wird, eine HF-Empfangsspannung induziert wird, wenn die Karte in das Karten-Schreib/Lesegerät eingeführt ist. Die Induktivität ist an einen Zweiweggleichrichter 2 (Brückengleichrichter) angeschlossen. Am Ausgang des Gleichrichters liegt eine aus zwei Transistoren T1, T2 gebildete Stromspiegelschaltung 3, mit der ein kleiner Teil des Gesamtstroms ausgekoppelt und einem Demodulator 4 zugeführt wird. An dem Ausgang des Gleichrichters 2 liegen ferner ein Parallelspannungsregler 5 sowie eine digitale Schaltung 7, die die eigentliche Schaltung zum Betrieb der Chipkarte beinhaltet. Mit dem ebenfalls parallel dazu geschalteten Kondensator 6 wird schließlich die relativ große Onchip-Kapazität angedeutet.

Alle Spannungen bei der in Figur 1 gezeigten Schaltung beziehen sich auf die negative Versorgung auf der Gleichspannungsseite. Die in der Induktivität 1 induzierte HF-Eingangsspannung wird durch den Zweiweggleichrichter 2 gleichgerichtet. Am Ausgang des Gleichrichters entsteht somit eine Halbwellen-Spannung mit doppelter Grundfrequenz gegenüber der ausgesendeten HF-Spannung. Die hohen Frequenzanteile dieser Spannung werden durch die Onchip-Kapazität 6 geglättet bzw. beseitigt, wobei der Parallelspannungsregler 5 eine konstante Versorgungsspannung erzeugt und der digitalen Schaltung 7 zuführt. Je nach dem Abstand der Karte von dem Karten-Schreib/Lesegerät kann der Strom um ein Vielfaches höhere Werte annehmen, als sie zur Versorgung der digitalen Schaltung 7 notwendig sind. Das zu demodulierende Signal hat somit einen hohen Dynamikumfang.

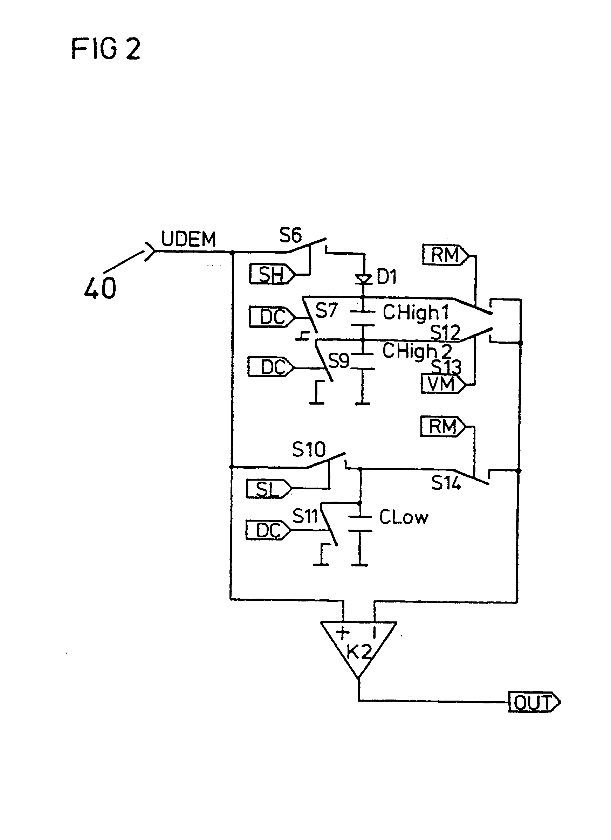

Figur 2 zeigt eine Ausführungsform des erfindungsgemäßen Demodulators. Diese Schaltung weist einen Eingang 40 auf, in den das von der Stromspiegelschaltung 3 ausgekoppelte, modulierte Empfangssignal UDEM eingespeist wird. Der Eingang ist über einen ersten Schalter S6 und eine Diode D1 an einen ersten Anschluß eines ersten Kondensators CHigh1 geführt, dessen zweiter Anschluß mit einem ersten Anschluß eines zweiten Kondensators CHigh2 verbunden ist. Der zweite Anschluß des zweiten Kondensators CHigh2 liegt an Masse.

Der erste Anschluß des ersten Kondensators CHigh1 ist über einen zweiten Schalter S12 mit einem invertierenden ersten Eingang eines Vergleiches K2 und über einen dritten Schalter S7 mit Masse verbindbar. Der gemeinsame Verbindungspunkt der beiden Kondensatoren CHigh1, CHigh2 ist über einen vierten Schalter S13 mit dem invertierenden ersten Eingang des Vergleiches K2 und über einen fünften Schalter S9 mit Masse verbindbar.

Der Eingang 40 ist ferner über einen sechsten Schalter S10 zu dem ersten Anschluß eines dritten Kondensators CLow geführt, dessen zweiter Anschluß an Masse liegt. Der erste Anschluß des dritten Kondensators ist ferner über einen siebten Schalter S14 mit dem invertierenden Eingang des Vergleichers K2 und über einen achten Schalter S11 mit Masse verbindbar.

Der Eingang 40 ist schließlich auch mit einem nichtinvertierenden zweiten Eingang des Vergleichers K2 verbunden. Am Ausgang des Vergleichers K2 liegt die demodulierte Spannung an.

Die mit der Stromspiegelschaltung ausgekoppelte und dem Eingang 40 zugeführte ASK-modulierte Empfangsspannung enthält einen konstanten Mittelwert und das überlagerte amplitudenmodulierte Datensignal. In einer ersten Initialisierungsphase werden die drei Kondensatoren zunächst durch Schließen des dritten, fünften bzw. achten Schalters S7, S9, S11 entladen. Die Schalter werden mit einem Steuersignal DC betätigt, das, ebenso wie die anderen Schalter-Steuersignale SH, SL, VM, RM, von der digitalen Schaltung 7 erzeugt wird.

Während eines hohen Pegels der ASK-modulierten Spannung (Stopbit = 1) folgt dann die Abtastphase, nachdem der dritte, fünfte und achte Schalter S7, S9, S11 mit dem Steuersignal DC geöffnet und der erste Schalter S6 mit dem Steuersignal SH geschlossen worden ist. Mit dem aus dem ersten und dem zweiten Kondensator CHigh1, CHigh2 gebildeten kapazitiven Spannungsteiler wird ein erster (virtueller) Mittelwert erzeugt, der zum Erkennen eines niedrigen Pegels der ASK-modulierten Spannung (Startbit = 0) dient. Zu diesem Zweck wird der vierte Schalter S13 mit dem Steuersignal VM geschlossen, so daß der gemeinsame Verbindungspunkt zwischen dem ersten und dem zweiten Kondensator mit dem invertierenden ersten Eingang des Vergleichers K2 verbunden ist. Der zweite und siebte Schalter S12, S14 ist dabei geöffnet.

Solange die modulierte Spannung UDEM ihren hohen Pegel hat, liegt am Ausgang des Komparators K2 eine Spannung mit dem logischen Wert 1 an. Vermindert sich die Spannung entsprechend der ASK-Modulation, so wird am Ausgang des Komparators K2 eine Spannung mit dem logischen Wert 0 erzeugt. Durch die nachgeschaltete digitale Schaltung 7 wird nun der niedrige Pegel (Startbit) erkannt und dieser Pegel durch Schließen des sechsten Schalters S10 mittels des Steuersignals SL in dem dritten Kondensator CLow gespeichert. Die Kapazität dieses Kondensators ist im wesentlichen so groß, wie die Kapazität der Reihenschaltung des ersten und zweiten Kondensators.

Die Diode D1 verhindert bei einem solchen niedrigen Pegel ein Entladen des ersten und zweiten Kondensators CHigh1, CHigh2. Da jedoch ein Spannungsabfall von etwa 0,7 V beim Aufladen nicht toleriert werden kann, ist die Diode im allgemeinen durch einen Schalter realisiert, der von einem weiteren Komparator (nicht dargestellt) gesteuert wird.

Anschließend wird der erste; der vierte, und der sechste Schalter S6, S13, S10 mit den Steuersignalen SH, VM, SL geöffnet, während der zweite und der siebte Schalter S12, S14 mit dem Steuersignal RM geschlossen wird. Aus dem in der Reihenschaltung aus dem ersten und dem zweiten Kondensator CHigh1, CHigh2 gespeicherten hohen Pegel und dem in dem dritten Kondensator CLow gespeicherten niedrigen Pegel wird dadurch ein zweiter Mittelwert gebildet und an den invertierenden Eingang des Vergleichers K2 angelegt.

Die weiteren Pegel der ASK-modulierten Spannung, die an dem nichtinvertierenden zweiten Eingang des Vergleichers K2 anliegen, werden nun mit diesem zweiten Mittelwert verglichen und mit ihrem vollen Spannungshub an den Ausgang des Vergleichers K2 geführt.

## Patentansprüche

1. Verfahren zur Demodulation einer durch Wechsel der Amplitude zwischen einem niedrigen und einem hohen Pegel (ASK-) modulierten Spannung, insbesondere zur Anwendung bei einer kontaktlosen Datenübertragung von einem Karten-Schreib/Lesegerät zu einer Chipkarte,
**dadurch gekennzeichnet, dass** in einer Initialisierungsphase ein erster Mittelwert aus dem hohen Spannungspegel und einer daraus abgeleiteten und gespeicherten Teilspannung erzeugt wird, um durch anschließenden Vergleich der modulierten Spannung mit diesem ersten Mittelwert einen Wechsel auf einen einen Startwert darstellenden niedrigen Spannungspegel zu erfassen; und in einer anschließenden Demodulationsphase ein zweiter Mittelwert aus dem erfaßten niedrigen und dem hohen Spannungspegel erzeugt wird, um die modulierte Spannung durch Vergleich mit dem zweiten Mittelwert zu demodulieren.

2. Demodulator zur Durchführung des Verfahrens nach Anspruch 1,
**dadurch gekennzeichnet, dass** zur Erzeugung des ersten Mittelwertes ein aus einer Reihenschaltung eines ersten und eines zweiten Kondensators (CHigh1, CHigh2) gebildeter kapazitiver Spannungsteiler vorgesehen ist, an den die modulierte Spannung (UDEM) anlegbar ist, und daß ein Vergleicher (K2) vorgesehen ist, dessen erstem Eingang über einen Abgriff des Spannungsteilers der erste Mittelwert zugeführt wird und an dessen zweitem Eingang die modulierte Spannung anliegt, und dass ein dritter Kondensator (CLow) zum Speichern des erfaßten niedrigen Spannungspegels vorgesehen ist, der zur Erzeugung des zweiten Mittelwertes parallel mit der Reihenschaltung aus dem ersten und dem zweiten Kondensator (CHigh1, CHigh2) schaltbar ist.

3. Demodulator nach Anspruch 2,
**gekennzeichnet durch** eine dem Vergleicher (K2) nachgeschaltete digitale Schaltung (7) zur Betätigung von Schaltern (S6, S7, S9, S10, S11, S12, S13, S14) in der Weise, daß in der Initialisierungsphase die modulierte Spannung an den kapazitiven Spannungsteiler geführt und dessen Abgriff mit dem ersten Eingang des Vergleichers (K2) verbunden ist und daß nach dem Speichern des erfaßten niedrigen Spannungspegels in dem dritten Kondensator (CLow) dieser parallel zu dem kapazitiven Spannungsteiler geschaltet und mit dem ersten Eingang des Vergleichers (K2) verbunden wird, während die modulierte Spannung an dem zweiten Eingang des Vergleichers (K2) anliegt.

4. Demodulator nach einem der Ansprüche 2 oder 3,
**dadurch gekennzeichnet, dass** die modulierte Spannung über eine Diode (D1) an den kapazitiven Spannungsteiler anlegbar ist.

5. Demodulator nach Anspruch 4,
**dadurch gekennzeichnet, dass** die Diode (D1) durch einen von einem Vergleicher gesteuerten Schalter realisiert ist.

## Claims

1. Method for demodulating a voltage which has been (ASK) modulated by changing the amplitude between a low level and a high level, in particular for use during contactless data transmission from a card reader/writer to a smart card,
**characterized in that**, in an initialization phase, a first mean value is produced from the high voltage level and a stored partial voltage derived therefrom in order to detect a change to a low voltage level, which represents a start value, by subsequent comparison of the modulated voltage with this first mean value; and, in a subsequent demodulation phase, a second mean value is produced from the detected low voltage level and the high voltage level in order to demodulate the modulated voltage by means of comparison with the second mean value.

2. Demodulator for carrying out the method according to Claim 1,
**characterized in that**, to produce the first mean value, a capacitive voltage divider is provided which is formed from a series circuit comprising a first and a second capacitor (CHigh1, CHigh2) and to which the modulated voltage (UDEM) can be applied, and **in that** a comparator (K2) is provided, to whose first input the first mean value is supplied via a tap of the voltage divider and to whose second input the modulated voltage is applied, and **in that** a third capacitor (CLow) for storing the detected low voltage level is provided which can be connected in parallel with the series circuit comprising the first and the second capacitor (CHigh1, CHigh2) in order to produce the second mean value.

3. Demodulator according to Claim 2,
**characterized by** a digital circuit (7), connected downstream of the comparator (K2), for actuating switches (S6, S7, S9, S10, S11, S12, S13, S14) such that, in the initialization phase, the modulated voltage is supplied to the capacitive voltage divider, and the latter's tap is connected to the first input of the comparator (K2), and in that, once the detected low voltage level has been stored in the third capacitor (CLow), the latter is connected in parallel with the capacitive voltage divider and is connected to the first input of the comparator (K2), while the modulated voltage is applied to the second input of the comparator (K2).

4. Demodulator according to one of Claims 2 or 3,
**characterized in that** the modulated voltage can be applied to the capacitive voltage divider via a diode (D1).

5. Demodulator according to Claim 4,
**characterized in that** the diode (D1) is produced by a switch controlled by a comparator.

## Revendications

1. Procédé de démodulation d'une tension modulée par changement de l'amplitude entre un niveau haut et un niveau bas (ASK), destiné notamment à être utilisé dans une transmission de données sans contact d'un appareil d'écriture/lecture de cartes à une carte à puce,
**caractérisé en ce que** dans une phase d'initialisation, on produit une première valeur moyenne à partir du niveau de tension haut et d'une tension partielle qui en est dérivée et qui est mémorisée pour relever par comparaison ensuite de la tension modulée à cette première valeur moyenne un passage à un niveau de tension bas représentant une valeur initiale ; et dans une phase de démodulation venant ensuite, on produit une deuxième valeur moyenne à partir de la tension basse relevée et du niveau haut de tension pour démoduler la tension modulée par comparaison avec la deuxième valeur moyenne.

2. Démodulateur pour la mise en oeuvre du procédé suivant la revendication 1,
**caractérisé en ce que** pour la production de la première valeur moyenne, il est prévu un diviseur de tension capacitif formé d'un circuit série constitué d'un premier et d'un deuxième condensateurs (CHigh1, CHigh2), diviseur de tension sur lequel peut être appliquée la tension (UDEM) modulée, et **en ce qu'**il est prévu un comparateur (K2) à la première entrée duquel est envoyée par l'intermédiaire d'une prise du diviseur de tension la première valeur moyenne et à la deuxième entrée duquel s'applique la tension modulée, et **en ce qu'**il est prévu un troisième condensateur (Clow) pour la mémorisation du niveau de tension bas relevé qui, pour la production de la deuxième valeur moyenne, peut être monté en parallèle au circuit série constitué du premier et du deuxième condensateurs (CHigh1, CHigh2).

3. Démodulateur suivant la revendication 2, **caractérisé par** un circuit (7) numérique qui est monté en aval du comparateur (K2) et qui est destiné à actionner des interrupteurs (S6, S7, S8, S9, S10, S11, S12, S13, S14) de façon à ce que, dans la phase d'initialisation, la tension modulée soit appliquée au diviseur de tension capacitif et que la prise de celui-ci soit reliée à la première entrée du comparateur (K2), et en ce que, après la mémorisation du niveau de tension bas relevé dans le troisième condensateur (Clow), celui-ci est monté en parallèle au diviseur de tension capacitif et est relié à la première entrée du comparateur (K2) tandis que la tension modulée est appliquée à la deuxième entrée du comparateur (K2).

4. Démodulateur suivant l'une des revendications 2 ou 3, **caractérisé en ce que** la tension modulée peut être appliquée par une diode (D1) au diviseur de tension capacitif.

5. Démodulateur suivant la revendication 4, **caractérisé en ce que** la diode (D1) est réalisée par un interrupteur commandé par un comparateur.
